# EUROPEAN PATENT APPLICATION

(11) **EP 1 297 883 A2**
(43) Date of publication of application: **02.04.2003**
(21) Application number: 02255580.9
(22) Date of filing: 09.08.2002
(51) Int. Cl.: B01D 53/46, B01D 46/00

(54) **A chemical-mechanical process whereby the contamination occuring through combustion of fossil fuels, petroleum and its by products is reduced.**

(30) Priority: 09.08.2001 CL 20011930
(71) Applicant: Fernandez, Rafael Vidal, Santiago (CH)
(72) Inventor: Fernandez, Rafael Vidal, Santiago (CH)
(74) Representative: Ablewhite, Alan James

(57) **Abstract**

A chemical-mechanical process whereby the contamination occurring through combustion of fossil fuels, petroleum and its by-products is reduced by altering the final chemical composition of the resulting gases; by reducing the totality of gases: SOx, NOx, VOC or HC, CO and CO2 and particle matter comprising the effluent and releasing a greater quantity of oxygen into the atmosphere than the one resulting post-combustion. A liquid chemical solution intervenes in this process, comprised of distilled water, sodium bicarbonate and urea, a mechanical device containing it that allows this solution to enter into contact with the gases from combustion, washing them, and also one or several filtering elements that are part of the mechanical device, comprised of a polymeric hydrocarbon fiber that chemically reacts in the presence of carbon, which produce the chain reaction of the resulting harmful gases in internal combustion engines, boilers, stacks, stationary or mobile sources, reducing their emissions and retaining the greater part of the solid elements and hydrocarbons inside the device and returning a gas effluent into the atmosphere that is richer in oxygen and has a very small amount of the remaining gases and particle matter than what was contained in the original effluent.

## Description

### PRIOR ART

The field of application of this invention relates to the control of environmental contamination caused by the gases produced by the combustion of fossil fuels such as petroleum and its by-products.

Nowadays, there are devices that are only capable of controlling part of the contaminants, called Catalytic Converters, which work by producing the oxidation of some components in the gas effluent that pass through it, transforming some gases highly lethal to living beings, such as CO, into a friendlier chemical compound, CO₂, which is, nonetheless, the principal cause of the greenhouse effect occurring on the planet at this time.

The catalysts used in automobiles are dry. The gases must pass through a grille, generally plated with Rhodium or Platinum. It is widely and massively used with the gas engine, but this does not occur with the diesel engine where a catalyst is generally inoperative in vehicles because of the engine's operating temperatures. Many have tried to halt contamination from combustion in this particular case, but without positive results thus far to date. Nonetheless, we must highlight that although the catalyst reduces the emissions of certain gases, it has no effect on others and transforms the lethal CO into CO₂, which decidedly does not help resolve the problem of excess CO₂ that man is releasing into the atmosphere, nor can it retain particle matter inside.

The presence of a chemical solution in this chemical-mechanical process allows the washing of combustion gases in a container or gas washing-filtering device where the filtering element of the device is a polymeric hydrocarbon that results in a total reduction of the effluent from such gases, also reducing the Carbon Dioxide (CO₂) produced by the combustion and releasing a higher quantity of post-filtrate Oxygen than the quantity that entered the system as such using a gas washing device such as the one herein described. This chemical-mechanical process can be installed in any mobile or stationary source emitting gases produced by the combustion of oil and its by-products. There is no record of any invention patent application that is capable of retaining all the contaminants produced by the combustion of oil, its by-products and other fossil fuels that also reduces the formation of Carbon Dioxide and simultaneously releases Oxygen as the end product of the gas filtering and washing process.

Nor is any similar process known at this time whereby we can reduce the Carbon Dioxide produced in the combustion of oil or other fossil fuels that has been patented or is in use in mobile equipment in order to achieve this effect. The only information available in this regard occurs in a combustion gas cooling process until achieving liquefaction of carbon dioxide, which takes place at approximately fifty-six degrees Celsius below zero. This element is converted into a liquid state and is carried by pipes and injected into empty oil wells in the North Sea. This can only be done in a stationary facility.

The principal known process that consumes Carbon Dioxide is the natural process of photosynthesis while the other process occurs in the oceans that also capture part of this gas. However, there is no record of a man-invented system that causes a significant reduction in the emissions of this post-combustion gas and has a commercial application now in use in mobile or stationary sources.

The process described can directly control the production of Carbon Dioxide produced by the combustion of vehicle engines. This gas is the natural product of our breathing and is considered to be non-contaminating thus far. However, it is one of the gases that is causing the "Greenhouse Effect" on the planet. It is relevant to know that at this time, more than 65% of this gas is generated by the engines installed in vehicles of transport.

Nations are alarmed by the "Greenhouse Effect" on the atmosphere as a result of emissions, principally of the five gases generated by industrial activity. Nations meeting in Kyoto in 1997 submitted a project to achieve a decrease in the generation of this gas by reducing the number of sources of emission. It was projected that CO₂ production quotas would be established where countries generating more CO₂ would have to buy quotas from nations that generated less in order to seek an equilibrium in the effort for the large generators of this gas to reduce its production to the utmost. But today, everyone knows that the United States, one of the largest producers of this gas, refused to sign this agreement this year because it would have an enormous impact on its economy if its productive capacity were reduced because there was no technical solution to this problem available.

The change in climate is a very serious problem for the planet that not everyone is capable of measuring. In 1900, the concentration of Carbon Dioxide was 285 ppm; in 2000, it was 375 ppm. This explosive growth in the concentration of this gas in the atmosphere is causing a change in the average temperature of the planet. It is estimated at this time that the temperature has risen 0.8 °C in the last 100 years and projections are that if the concentration continues to increase at the same pace as now, the average temperature of the planet will rise 4.5 °C by 2100. The consequences are impossible to measure. The number of hurricanes and typhoons has increased thus far, torrential rains have caused flooding and farmlands are devastated by rains that erode the land. All this is caused by a change in climate, and one of the principal causes of that change is carbon dioxide.

There are Industrial Patents that have been granted in the past in our country (see Patents Nos. 35813, 30840 and 34026) that sought to resolve the same technical problem: to control the emissions of combustion gases produced by internal combustion engines, but all these patents tried to control just particle matter. None specified changes in the chemical composition of the gases. However, thus far to date, none of the inventions now patented in Chile or in the world is in use except for exhaust catalysts.

### DESCRIPTION OF THE INVENTION

The invention described in this application is a complete chemical-mechanical process in which a chemical solution and a polymeric hydrocarbon intervene to perform the chemical process and a gas washing and filtering container or device as a mechanical element where the reaction physically takes place, causing a chemical reaction of the gases from the combustion of fossil fuels, petroleum and its by-products and reducing the emissions of gases harmful to the surrounding troposphere. It also has a positive effect on the quantity emitted of the other two, on the reduction of Carbon Dioxide and the increase in the quantity of Oxygen released.

The gases from the combustion are "washed" in a solution comprised of distilled water to which sodium bicarbonate and urea have been added, both in a concentration that fluctuates from 5% to 8% in volume. The concentration is variable and depends largely on the sulfur content in the fuel. The gas effluent must later pass through a filter element comprised of a polymeric hydrocarbon fiber.

This process is only possible by means of the sum of all these components that unleashes a chain reaction where each of the products and gases resulting from the combustion undergoes different processes that allow part of the contaminants to be captured and where others are transformed products useful to man. By concentrating particle matter and thereby achieving the transformation of part of the NOx, by generating atmospheric N₂, which is an element absolutely neutral to man and the surrounding environment, the process also achieves a control over the SOx by chemically precipitating it inside the device. The HC and C are absorbed, thus reducing the CO and CO₂ to obtain a resulting gas effluent with a lower percentage of these gases and a higher level of Oxygen - O₂.

The process described in this document has been laboratory-tested so I can warrant that the process effectively reduces harmful emissions and particle matter in ranges of close to 80% of the original gas effluent that leaves the engine after combustion. This value is not exact since it depends directly on the power of the engine, the working load and revolutions. In other words, it is a direct function of the gases to be treated and the size of the device where the process takes place.

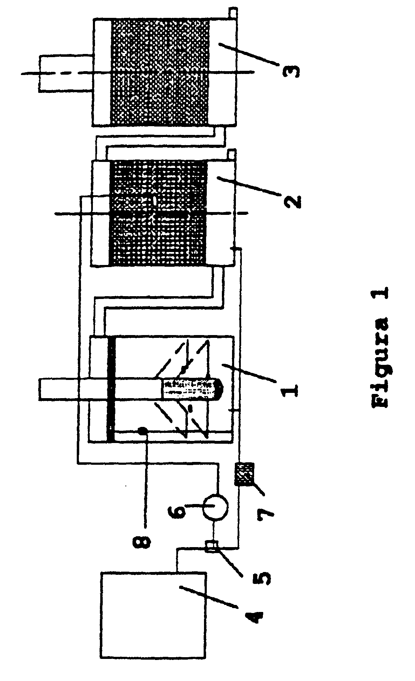

This process must be conducted in a gas washing and filtering device. The device invented to implement this process (figure 1) is comprised of two flow circuits which interact partially between themselves. The first flow circuit corresponds to the gas washing and filtering circuit and the second circuit corresponds to the chemical solution cleaning circuit. The first flow circuit is comprised of three units or chambers (1), (2) and (3), separated from each other, preferably cylindrical, for reasons of easy manufacture. They can be built in different sizes and shapes with the only limitations in design being the solution column in the first (1) and second (2) unit to achieve the goal of washing and moistening the filtering material, the volume of gases to be washed and the pressure restrictions imposed by the design of each exhaust system. Chamber (3) corresponds to a second filtering element. This latter chamber can work dry or wet. Added to these three chambers is the flow circuit of the chemical solution, comprised, first of all, by a chemical solution tank (4) that serves to maintain the level of chemical solution in units one and two, a solution recirculation system that takes part of the solution from chambers 1 to 3, comprised of one or several pump units and a contaminated solution filtering system that extracts the material captured by the solution from the solution and returns the solution to the clean circuit to then return it to the washing and filtering chambers.

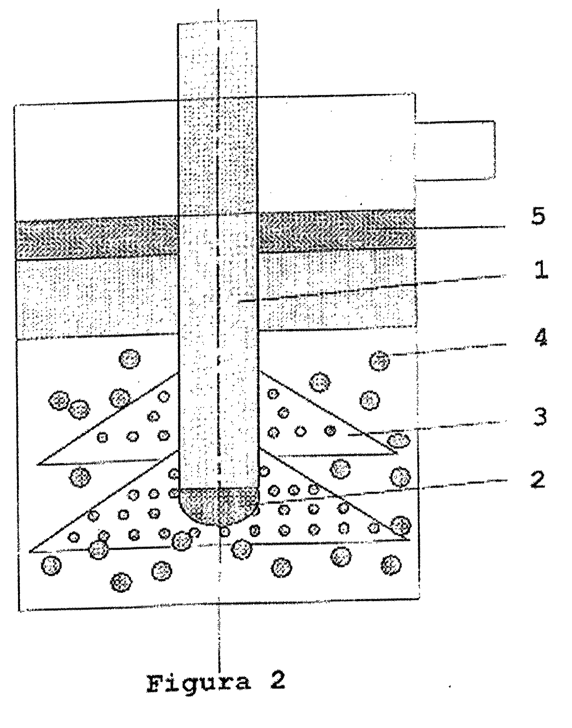

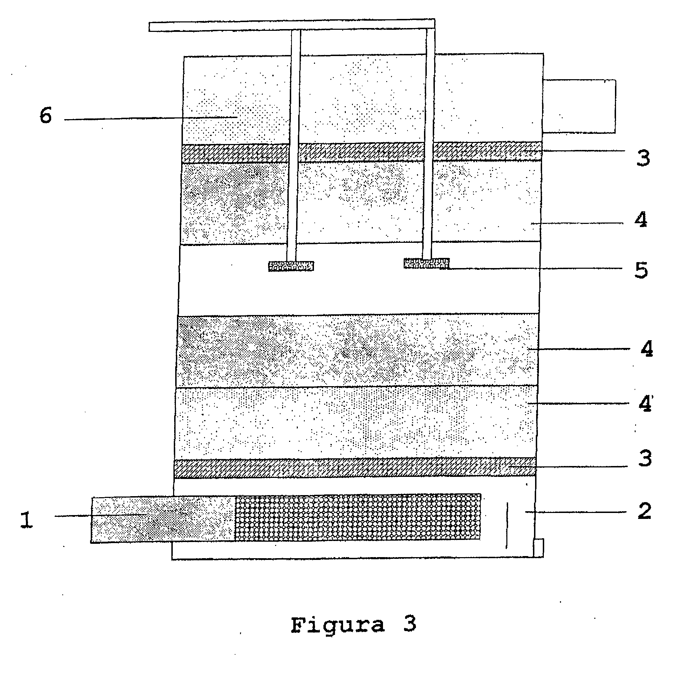

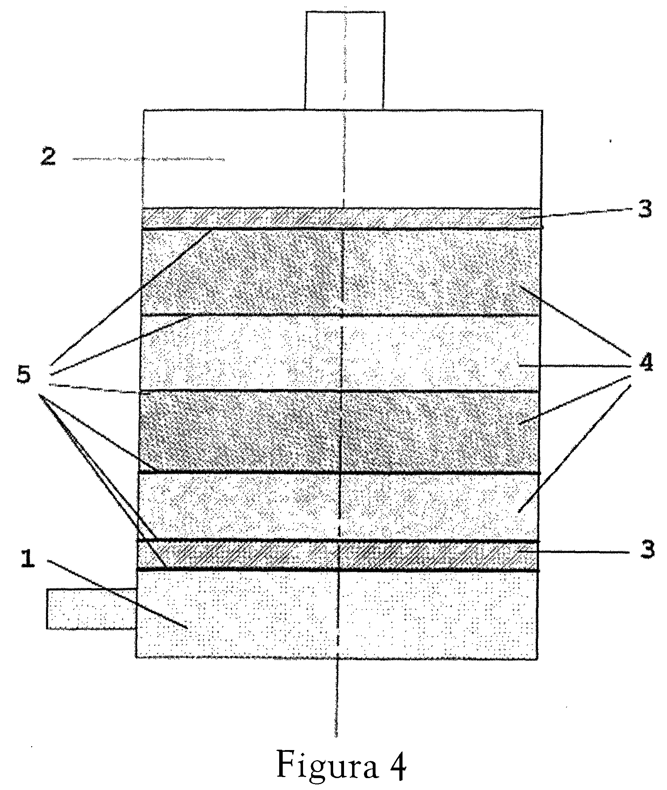

If we analyze the gas flow circuit, we find that:
1. The first unit corresponds to a gas washing chamber (figure 2) where the gases are bathed with water and pass through several obstacles that create internal turbulence that allows for greater contact between the chemical solution and the gases.
2. The second unit corresponds to a primary filtering unit (figure 3). The filtering occurs when the gases pass through several sections of a POLYMERIC HYDROCARBON whose principal property is the absorption of hydrocarbons. This material contains no metals or halides and has the capacity to filter particles in the gases of up to 1/325". This material can absorb VOC (Volatile Organic Compounds) that are the cause of ozone production when they are hit by ultraviolet sunlight. The use of this material not only reduces the emission of particle material into the atmosphere but also helps decontaminate by reducing the possibilities of the formation of other compounds such as Ozone. This filtering unit is nothing but an interchangeable filter element that must be replaced once it has become saturated. We have added to this filter a system of recirculation of the solution in the system in order to keep the polymeric hydrocarbon moist. Moreover, since it flows counter to the exiting gases, it helps clean the polymeric hydrocarbon and deposit the heavy particles at the bottom of the filter.
3. The third unit (figure 4) also corresponds to a secondary filter comprised of two or more sections of this same hydrocarbon-absorbing material. This is a filter element similar to the above and the manufacturing restrictions bear a direct relationship to the design of the mobile element and the space available to install the filter.
   The second circuit of the device is comprised of:
4. A solution storage tank system.
5. A solution pump system that takes the contaminated solution in the washer and filters and carries it to a filtering system.
6. A filtering system that retains the particle matter captured by the solution and returns clean solution to the circuit.
7. An electrical level control system that allows the exact level of solution to be maintained in the chambers.

### 1. Gas washing unit

The unit consists of a gas washing chamber (figure 2) where the gases reach the bottom of a tank through a cylindrical conduit (1) larger in diameter than the original gas conduit of the vehicle, ending in a perforated semi-sphere (2) with sufficient holes to force the gases to pass at a lower speed than what they have in the original duct installed by the vehicle manufacturer. The reason for this end in a semi-sphere and its holes is to achieve a relatively even distribution of the gases and avoid them striking against the bottom en masse. The gases thus released pass through the tank containing the chemical solution and naturally rise until they come up against the perforated conical surface (3). This cone has different hole runs that will allow the gas to rise naturally to the surface after first hitting against another cone of similar characteristics as the above, but the holes of which are not aligned with the first cone.

The holes in the cones are different in diameter and the holes furthest from the center are larger while those closest to the center are smaller: The largest are 13 mm and the smallest are 6 mm. The sole purpose is to force the gases to move towards the outside of the cones and thereby produce a uniform distribution of the gas load in order to perfect the gas washing. The hole diameters correspond to a prototype built to conduct several assays to prove, scientifically and practically, how the invention works. These hole diameters may vary in the future solely on the basis of the use and volume of gases to be washed, the ideal size of the same.

This unit contains a chemical solution level control system to cause an automatic refill of chemical solution from a tank, which also has a sprinkler through which the solution is received. There is a system to recirculate this liquid that is caught at the bottom of the tank carrying heavy particles outside of it and taking them to a sediment filter.

Several irregularly shaped floating bodies (4) are placed in bulk at the bottom of the tank, between the cones and on their surface solely to interfere with the normal flow of gases to the surface and cause them to enter into greater contact with the water in the tank, thereby increasing the capacity to retain the larger particles. These bodies should not be spherical or flat in order to keep them from obstructing the passage of gas through the holes of the cones.

Once the gases have passed through the perforated conical surfaces, they rise to the upper surface to go towards the second unit.

Washing units of a different shape and interior conformation can also be used. What is important is to achieve the maximum interaction between the resulting gases and the chemical solution so that the chemical solution retains the largest quantity possible of particle matter in this chamber and keeps this material from reaching the elements in order to be able to achieve the maximum useful life of these elements.

### 2. Primary filtering unit

This second unit (figure 3), also cylindrical or in another shape, consists of a deposit divided into two chambers where the lower chamber (2) is the chamber where the gases enter from the first unit, "WASHING UNIT", through a perforated duct (1) and the upper chamber (6) is the chamber from which exhaust gases exit. A filter element joins these two chambers, comprised of a polymeric hydrocarbon. This material is especially formulated to retain hydrocarbons, and is placed in the element in different layers with different densities according to the purpose sought. A first and last layer of material (3) is pressed to achieve a weave of filtrate capable of retaining the finer particles while the material is placed in spongier form in the intermediate sections (4) in order to be able to make use of the specific characteristics of this material since it has a greater ability to absorb hydrocarbons under these conditions.

Both the pressed element as well as the section of loose material must be preferably submerged in water in order to be able to optimize their working capacity as this is the way the material normally works. This material does not absorb water, just oils and products containing hydrocarbons.

The great difference with respect to all prior inventions known at this time relates to this material, which has the particularity of absorbing the hydrocarbons present in water. The size of the element will provide the capacity required and necessary for each application. The larger the engine the larger the size. The duration of the filtering element is directly proportional to the size of the engine and to the size of the unit on which it is mounted as well as the mechanical condition of the engine. The higher the quantity of harmful gases the shorter the duration of the element.

The material rejects water, so there is no fear that the filter will become easily saturated. This material behaves absolutely differently with water than other materials known today.

This material was created for other different purposes than to what it has been put here today. It has the particularity of being recyclable and not harmful to the environment since once it is saturated with oils, petroleum or its by-products, it can be put to another industrial use. Each kilogram of this material can absorb 25 kilograms of oil, petroleum or their by-products.

### 3. Secondary filtering unit

This unit (figure 4) is comprised of two chambers, like in the previous case. The lower one (1) is where the gases from the lower part of the primary filtering unit arrive and the upper chamber (2) is where the gases exit into the atmosphere. The filtering element must be installed between both chambers. The filtering element is comprised of different groups of absorbing material, each constituting a separate and individual element, pressed layers (3) and spongy layers (4) separated by screens (5) to avoid compacting the material as hydrocarbons are best absorbed when it is absolutely loose and uncompacted.

This unit is the simplest unit in the design as it can be an integral part of the second unit or a separate unit, as mentioned here. For reasons of the working of the material (to increase the area of contact), it is preferably important to establish, in its design, the entry of the gases through the lower part and their exit through the upper part, thus avoiding gas passing without any contact with this material. Since this secondary filter works only with the moisture coming from the primary filter, the design of the shape to be given to this unit will bear a relationship exclusively to the space available in the motor vehicle. It is only important to consider that the area of contact between the gases and the material must be as ample as possible in order to reduce the speed at which they pass through the absorbing material and thereby achieve a greater absorption of the harmful elements.

### 4. Solution circuit

In order for this device to work completely (figure 1), a solution tank (4) has been added with the respective valves (5), level control system (8) and automatic pouring of the solution from this system individually into each of the two tanks containing this element for the purpose of maintaining the required levels of this liquid in the primary filtering and washing units. This system can be endowed with an electrical device that advises the vehicle driver when the solution level is too low.

This invention is complemented by a solution pumping system (6) to recirculate the solution in the washing unit and in the primary filtering unit, as well as a filter to collect the sediment resulting from the washing (7), which will mean a work system in an internally cleaner environment with a greater useful life. The particle matter sediment is finally captured in this filter (7), which can be disposed of from time to time when maintenance is performed on the system.

### REFERENCE STATEMENTS

1. A chemical-mechanical process to reduce the contamination caused by gases and products resulting from the combustion of fossil fuels, petroleum and its by-products, CHARACTERIZED by the utilization of a container or mechanical device that bathes the gases from combustion in a chemical solution comprised of Distilled Water, Sodium Bicarbonate and Urea, these latter two components each in concentrations of 5% to 8% in volume. These resulting gases must then be filtered through a fiber comprised of Polymeric Hydrocarbon. This process ultimately results in a significant reduction in the emissions of contaminating gases and particle matter produced by combustion, such as: CO, NOx, SOx, and HC; a non-contaminating gas such as CO₂ and the release of O₂ as a gas resulting from the process. This entire process must be conducted in a gas wash and filter container or device that conducts two or more stages to achieve the cleaning of gases. The first stage corresponds to a washing stage where gases must interact with the chemical solution in order to achieve the washing required to retain the larger particles carrying the effluent, smother the carbon particles that are on fire and begin the process to transform SOx into H₂SO₄ in the initial phase, and finally Na₂SO₄. NOx, HC and CO and CO₂ are also precipitated by a chemical reaction with NH₂-CO-NH₂ that will result in N₂, H₂O and H₂CO₃ in the first phase of reaction and subsequently form a CO₃ carbonate ion; primary filtrate through a primary filtering device to retain the smaller particles and where the aforesaid chemical reactions will continue in the washer since this filter also contains inside a quantity of the same chemical solution that is in the washer, but Carbon will begin to be captured in this primary filtrate through the fiber since it is rich in Hydrogen. Oxygen is released in this stage; secondary or further filtrate using a secondary or further filtrate device that is intended to improve even more the effect of reducing the concentrations of carbon dioxide, in this case, in the same way that the primary filter will capture the carbon and the hydrocarbons.
2. A washing and filtering device for gases coming from the combustion of Petroleum and its by-products and/or from fossil Fuels according to Statement 1, CHARACTERIZED in that it has three stages to achieve the cleaning of the gases: washing through a washing device that produces the primary wash required to retain the larger particles; primary filtration by means of a primary filter device that seeks to retain the smaller particles and secondary filtration by means of a secondary filtrate device that seeks to retain the hydrocarbons that are expelled into the atmosphere; the device being complemented by a filter saturation and level control system and by a solution recirculation system that has its own system to pump and filter the fluid in circulation and captures and stores the suspended sediment previously captured by the solution in the three stages of gas washing and cleaning.
3. A washing device according to Statement 2, CHARACTERIZED by the way in which the gases enter the washing chamber where they can arrive through a duct or pipe that has an element on the butt end to distribute the gases into many smaller flows that meet the purpose of avoiding that the gases arrive as a whole at the bottom of the washing tank. It divides them into different smaller flows to avoid the formation of one great bubble and seeks to distribute them harmonically inside the container; with a washing chamber comprised of two or more flat or conical perforated separators that are used to divide the gas flow into increasingly smaller gas flows by crossing the holes in each. The holes in the separators must not be aligned to thereby increase the contact of the gases with the chemical solution in the chamber. This seeks to produce the greatest internal turbulence possible so that the contact between gases and solution is also as great as possible. Several irregularly shaped floating bodies that are neither flat nor spherical are also circulating in suspension in addition to the solution. Their purpose is to make the gases crash into the surface and be detoured at different angles, thereby increasing the possibility that the heavy particles hit against the surfaces in movement and, therefore, increase the possibility of achieving a good washing of the gases. The intent is to capture the highest quantity of particles in this device, especially those largest in size.
4. A primary filtrate device according to Statements 1 and 2, CHARACTERIZED principally by the utilization of a filter element comprised of polymeric hydrocarbon that is interchangeable after a certain useful life. In this stage, the element has a large quantity of the pressed polymeric hydrocarbon in order to achieve the filtration of the particles.
5. A secondary filtrate device according to Statements 1 and 2, CHARACTERIZED principally by the utilization of an element comprised of polymeric hydrocarbon in the same way as Statement 4. In the secondary stage, the material has been disposed in a spongier manner in order to improve the capacity to catch principally the compounds containing suspended hydrocarbons.
6. A device according to Statements 4 and 5, CHARACTERIZED by filter elements replaceable over time once the original elements have become saturated with hydrocarbons.
7. A device according to Statements 1 and 2, CHARACTERIZED in that it has other elements of control to allow the operator of a motor or driver of a vehicle on which the device has been installed to know instantly what the degree of saturation is of his filters and the working solution levels.
8. A device according to Statements 1 and 2, CHARACTERIZED by filtering and storing the sediment collected in the washing and filtering stage by means of an additional filtrate system installed in the circuit that recirculates the chemical solution that flows in and between the three gas washing and filtering stages and allows this sediment to be stored until the system is maintained, which is when they are finally eliminated. This allows for a concrete handling of this material that is currently expelled into the atmosphere, with the consequent damage to the environment.
9. A chemical-mechanical process according to Statements 1, 2, 4 and 5, CHARACTERIZED by the utilization of a filter comprised of a polymeric Hydrocarbon capable of reacting with the results of the primary reaction that occurs between the solution comprised of sodium bicarbonate, urea and gases resulting from combustion. This polymeric hydrocarbon is a material where the principal property is that of a hydrocarbon absorbent capable of reacting with a CO₃ ion and with the hydrocarbons resulting from the combustion of Petroleum, its by-products and other fossil fuels and their by-products. This polymeric hydrocarbon consists basically of a compound with a high hydrogen content and is also an oleophyllic and recyclable material that is environmentally friendly.
10. A chemical process according to Statement 1, CHARACTERIZED by the utilization of a solution comprised of distilled water, sodium bicarbonate and urea, these latter compounds each in the proportion of 5 to 8% in volume.
11. A mechanical process according to Statements 1, 2, 3 and 9, CHARACTERIZED by the utilization of a device or recipient that allows gases to interact with the chemical solution, thus achieving the washing of the gases.
12. A chemical-mechanical process according to Statements 1, 2, 4, 5 and 9, CHARACTERIZED by the utilization of a device or recipient that has a filtrate system, after the gas washing stage, based on fibers made of a polymeric hydrocarbon with one or several filtrate stages, depending on the number of stages required in the percentage reduction of hydrocarbons.
13. A chemical process according to Statements 1, 2, 3 and 9, CHARACTERIZED in that it releases a higher quantity of Oxygen (O₂) as a gas resulting post-combustion as a consequence of the post-washing and filtrate of the gases resulting from the combustion of Petroleum, its by-products and other fossil fuels when part of the carbon in the polymeric hydrocarbon fibers is absorbed.
14. A chemical process according to Statements 1, 2, 3 and 9, CHARACTERIZED in that it reduces the emissions of Nitrogen Oxide (NOx) resulting from the combustion of Petroleum, its by-products and other fossil fuels when reacting with (NH₂)₂CO in the washing and primary filtrate tank, releasing a higher quantity of atmospheric N₂ into the atmosphere.
15. A chemical process according to Statements 1, 2, 3, 4 and 10, CHARACTERIZED in that it reduces the emissions of Sulfur Oxide (SOx) resulting from the combustion of Petroleum, its by-products and other fossil fuels, transforming part of these emissions into the end product of Sodium Sulfate (Na₂SO₄₊).
16. A chemical process according to Statements 1, 2, 4, 5 and 10, CHARACTERIZED in that it obtains a significant reduction in volatile hydrocarbons (HC) resulting from the combustion of Petroleum, its by-products and other fossil fuels.
17. A mechanical process according to Statements 1, 2, 3, 4 and 5, CHARACTERIZED in that it retains a large part of the particles coming from combustion that are normally released into the environment by means of the washing of gases that carry the particle matter and subsequently through the filtering of gases.
18. A chemical-mechanical process according to Statements 1, 3, 4, 5, 7, 9, 10, 14 and 16, CHARACTERIZED in that it helps reduce the formation of ozone by reducing, by absorption, part of the volatile hydrocarbons and NOx that create ozone in the troposphere when hit by ultraviolet sun rays.
19. A process according to Statements 6 and 8, CHARACTERIZED in that the resulting sediment and material captured by the polymeric hydrocarbon fibers are absolutely manageable by man. The sediment is a fertilizing element and the material of the elements can be transformed into Oil 6 after thermal treatment, meaning that we have stopped the contaminants and have obtained man-friendly substances.

## Claims

1. A process for reducing contamination caused by gases resulting from fossil fuel combustion, comprising a first washing stage, where the gases are contacted with an aqueous solution of alkali metal bicarbonate and urea, and a second stage, where the effluent from the first stage is filtered through a hydrocarbon polymer fibre filter.

2. A process according to Claim 1, in which the aqueous solution is 5% by volume alkali metal bicarbonate and 8% by volume urea.

3. A process according to Claim 1 or Claim 2, in which the filtration stage is in two steps:
primary filtration by means of a primary filter device that seeks to retain the smaller particles; and secondary filtration by means of a secondary filtrate device that seeks to retain the hydrocarbons that are expelled into the atmosphere.

4. A washer/filter device for use in the process of Claims 1 to 3, comprising three successive interconnected parts: a washing device, a primary filter for small particles and a secondary filter to retain hydrocarbons, the device being complemented by a filter saturation and level control system and by a solution recirculation system that has its own system to pump and filter the fluid in circulation and captures and stores the suspended sediment previously captured by the solution in the three stages of gas washing and cleaning.
